# EUROPEAN PATENT SPECIFICATION

(11) **EP 4 454 846 B1**
(45) Date of publication and mention of the grant of the patent: **22.04.2026**
(21) Application number: 23169558.6
(22) Date of filing: 24.04.2023
(51) Int. Cl.: B27N 3/02, B27N 3/04, B27N 3/18, B27N 7/00, B32B 37/08, B32B 37/10, B27N 3/08

(54) **METHOD OF PRODUCING ONE OR MORE LAMINATE BOARDS AND LAMINATE BOARD**
VERFAHREN ZUR HERSTELLUNG EINER ODER MEHRERER LAMINATPLATTEN UND LAMINATPLATTE
PROCÉDÉ DE PRODUCTION D'UN OU PLUSIEURS PANNEAUX STRATIFIÉS ET PANNEAU STRATIFIÉ

(43) Date of publication of application: 30.10.2024
(73) Proprietor: Kronoplus Limited, Mosta (MT)
(72) Inventor: NAGY, Imre, 9700 Szombathely (HU); TALASZ, Marco, 7601 Siget in der Wart (AT)
(74) Representative: Pfenning, Meinig & Partner mbB

(56) References cited:
- EP-A1- 3 385 046
- US-A1- 2009 155 593
- US-A1- 2018 272 558
- US-A1- 2021 238 865
- US-A1- 2021 253 922

## Description

The present invention is directed to a method of producing one or more laminate boards and to a laminate board.

Laminate boards known from the state of the art usually comprise a board, a décor layer, and a finishing layer. The finishing layer should on the one hand protect the laminate from external influences and should furthermore provide the surface of the laminate with a desired surface gloss or mattness.

Although laminate boards with smooth finishing layers are known from the state of the art, the finishing layers of these known laminate is still not satisfactorily high enough, so that touching the surface of these laminate boards can feel uncomfortable. Furthermore, such known laminate boards are relatively vulnerable to external influences, such as scratches, acid or steam.

Moreover, no method is available yet for producing a laminate that has a very smooth and matt surface having good resistances.

US2021238865A1 discloses a method for manufacturing a panel that includes a substrate and a top layer provided on the substrate. The top layer may include a decor film and a transparent film.

Starting herefrom, it was the object of the present invention to provide a method of producing one or more laminate boards having a finishing layer with improved properties.

This object is solved by a method having the features of patent claim 1 and by a board having the features of patent claim 11. The dependent claims represent advantageous further developments.

According to the present invention, a method of producing one or more laminate boards is defined in claim 1.

In step a), at least one board is provided, wherein the at least one board comprises wooden material. For example, the at least one board can be at least one particle boards and/or at least one fibreboard, such as a medium-density fibreboard (MDF board) or high-density fibreboard (HDF board). Both particle boards and fibreboards are pressed wood products made from wood fibres mixed with synthetic resin adhesives. The main differences are the size and type of wood fibres used in production. Fibreboards, in particular MDF boards, use fine, granular particles for a more homogeneous density, with smooth, narrow edges for strength and workability. Particleboards are made from smaller pieces of refined wood. As usual, one board of the at least one board provided in step a) can have two (opposite) sides, i.e. one first side and one second side.

In step b), at least one board layer assembly is produced. For this,
- at least one intermediate layer comprising at least one décor layer is applied on at least one side of the at least one board provided in step a) and, furthermore, at least one finishing layer (or at least one precursor for at least one finishing layer) is applied on the at least one intermediate layer (already applied on the at least one side of the at least one board), or
- at least one coated or impregnated intermediate layer comprising at least one décor layer is applied on at least one side of the at least one board provided in step a), the at least one coated or impregnated intermediate layer having a coating or impregnation of at least one finishing layer (or at least one precursor for at least one finishing layer).

Thus, there are two alternatives for producing the at least one board layer assembly. According to the first alternative, firstly, at least one intermediate layer (comprising at least one décor layer) is applied on at least one side of the at least one board and then at least one finishing layer (or at least one precursor for at least one finishing layer) is applied on the at least one intermediate layer (already applied on the at least one side of the at least one board). According to the second alternative, at least one intermediate layer (comprising at least one décor layer), which already has at least one finishing layer (or at least one precursor for at least one finishing layer) as a coating or impregnation, is applied on at least one side of the at least one board.

The at least one intermediate layer comprises at least one décor layer (or decorative layer) and can optionally comprise at least one balancing layer. Thus, the at least one board layer assembly comprises at least one board, at least one intermediate layer, and at least one finishing layer (or at least one precursor for a finishing layer), wherein the at least one intermediate layer comprises at least one décor layer and optionally at least one balancing layer, wherein the at least one intermediate layer is arranged on at least one side of the at least one board, and wherein at least one finishing layer (or at least one precursor for a finishing layer) is arranged on the at least one intermediate layer.

For example, in step b), the at least one board layer assembly can be produced by
- applying at least one décor layer on at least one side of the at least one board and applying at least one finishing layer (or at least one precursor for at least one finishing layer) on the at least one décor layer, or
- applying at least one décor layer on at least one side of the at least one board, applying at least one balancing layer on the at least one décor layer, and applying at least one finishing layer (or at least one precursor for at least one finishing layer) on the at least one balancing layer, or
- applying at least one coated or impregnated décor layer on at least one side of the at least one board, the at least one coated or impregnated décor layer having a coating or impregnation of (or with) at least one finishing layer (or at least one precursor for at least one finishing layer), or
- applying at least one coated or impregnated décor layer on at least one side of the at least one board, the at least one coated or impregnated décor layer having a coating or impregnation of (or with) at least one balancing layer and at least one finishing layer (or at least one precursor for at least one finishing layer).

For example, in step b), the at least one intermediate layer can be applied on one side of each of the at least one board or can be applied on both sides of each of the at least one board. In the first case, (after applying the at least one finishing layer if the at least one intermediate layer does not already have a coating or impregnation of at least one finishing layer,) one or more board layer assemblies is/are obtained each comprising one board, at least one intermediate layer arranged on one side of the board, and at least one finishing layer arranged on the at least one intermediate layer. In the second case, (after applying the at least one finishing layer if the at least one intermediate layer does not already have a coating or impregnation of at least one finishing layer,) one or more board layer assemblies is/are obtained each comprising one board, at least one first intermediate layer arranged on the first of the two sides of the board and at least one second intermediate layer arranged on the second of the two sides of the board, and at least one first finishing layer arranged on the at least one first intermediate layer and at least one second finishing layer arranged on the at least one second intermediate layer.

The at least one décor layer can preferably be at least one décor paper. In particular, common impregnated papers can be used as at least one décor paper. For example, these papers can be prepared in a two-stage impregnation process by applying aqueous solutions of melamine and/or urea resins. As the range of different decors, the range of surface weight from papers that can be used is varying.

For example, common finishing layers known from the state of the art can be used as the at least one finishing layer. According to the invention, the at least one finishing layer is an acrylic layer.

It is possible that the at least one finishing layer is carried by a carrier, e.g. a PET foil. In this case, the at least one finishing layer can be applied to the at least one intermediate layer together with the carrier or by transferring the at least one layer from the carrier to the at least one intermediate layer. The carrier can be peeled off after application. It is also possible that the carrier remains underneath the finishing layer and is pressed together with it.

Furthermore, at least one precursor for the at least one finishing layer might be applied in step b), wherein the at least one precursor becomes at least one finishing layer during the at least one main pressing step. For example, the precursor for at least one finishing layer might be an (uncured) resin (e.g. present in form of a liquid), which is cured during the at least one main pressing step and thereby becomes the at least one finishing layer. According to another example, the at least one precursor for at least one finishing layer might be a liquid lacquer or a liquid varnish, which is cured during the at least one main pressing step and thereby becomes the at least one finishing layer (e.g. in form a solid lacquer layer or a solid varnish layer).

The at least one finishing layer can preferably be at least one matting layer. Accordingly, the at least one precursor for the finishing layer can preferably be at least one precursor for at least one matting layer.

In step c), the at least one board layer assembly produced in step b) is subjected to at least one main pressing step in which the at least one board layer assembly is pressed with a main pressing pressure at a main pressing step temperature of at least 100 °C (thereby laminating the at least one board layer assembly). The pressing with the main pressing pressure can be achieved, for example, by pressing the at least one board assembly between press plates in a press, e.g. a multi-stage press. Furthermore, at least one heating device can be used, for example, to heat and/or keep the at least one board layer assembly at the main pressing step temperature. If at least one precursor for at least one finishing layer is used in step b), this at least one precursor becomes the at least one finishing layer during the at least one main pressing step.

After step c), the at least one board layer assembly can also be designated as at least one laminate board.

In step d), the at least one (still) pressed board layer assembly is subjected to a cooling step in which the at least one pressed board layer assembly is cooled from the main pressing step temperature to a pressing release temperature of 90 °C or lower while keeping the at least one pressed board layer assembly pressed substantially with the main pressing pressure. Thus, the pressed board layer assembly is cooled from the main pressing step temperature to the pressure release temperature while substantially not changing the pressing pressure of step c). In other words, the cooling takes place when the at least one pressed board layer assembly is still in a pressed state without substantially lowering the pressure used in step c). Thus, the pressure acting on the at least one pressed board layer assembly during step c) is substantially not released after step c) until the cooling step ends, i.e. until the at least one pressed board layer assembly has been cooled to the pressure release temperature. When the at least one pressed board layer assembly has been cooled to the pressure release temperature, the pressing pressure can be (fully) released from the at least one board layer assembly.

The pressure release temperature can also be called cooling step temperature.

The feature that the at least one pressed board layer assembly is kept pressed substantially with the main pressing pressure means that the at least one pressed board layer assembly is kept pressed with a pressure not more than 5 kPa higher and not more than 5 kPa lower than the main pressing pressure, preferably with a pressure not more than 2 kPa higher and not more than 2 kPa lower than the main pressing pressure, more preferably with a pressure not more than 500 Pa higher and not more than 500 Pa lower than the main pressing pressure, in particular with a pressure not more than 100 Pa higher and not more than 100 Pa lower than the main pressing pressure.

Preferably, in step d), the at least one pressed board layer assembly is subjected to a cooling step in which the at least one pressed board layer assembly is cooled from the main pressing step temperature to a pressure release temperature of 90 °C or lower while keeping the at least one pressed board layer assembly pressed with the main pressing pressure.

After step d), the pressing pressure can be (or is) (fully) released from the at least one board layer assembly (e.g. in a step e) of the method, e.g. by (fully) releasing the press plates and/or (fully) opening the press used for pressing the at least one board layer assembly.

According to the present invention, after the start of step c), a release of the (pressing) pressure to a pressure substantially below the main pressing pressure takes place only after the end of step d), i.e. after the at least one pressed board layer assembly has been cooled to the pressure release temperature. In this context, a pressure substantially below the main pressing pressure means a pressure that is at least 5 kPa below the main pressing pressure, preferably a pressure that is at least 2 kPa below the main pressing pressure, more preferably a pressure that is at least 500 Pa below the main pressing pressure, in particular a pressure that is at least 100 Pa below the main pressing pressure.

Preferably, after the start of step c), a release of the (pressing) pressure to a pressure below the main pressing pressure takes place only after the end of step d), i.e. after the at least one pressed board layer assembly has been cooled to the pressure release temperature.

The cooling of the at least one pressed board layer in step d) can be conducted e.g. by using cooling device, preferably back cooling device integrated into the press.

With the method according to the present invention a laminate board with at least one finishing having improved properties can be obtained due to the main pressing step and the specific cooling step. In detail, by pressing of the at least one board layer assembly in the at least main pressing step in step c), the surface of the at least one finishing layer is smoothed and sealed resulting in the at least one finishing layer having improved properties, such as e.g. a low surface roughness, a low glossiness, and a high resistance to scratching. The cooling step in step d) ensures that the at least one finishing layer still exhibits these improved properties after releasing the pressing pressure from the at least one board layer assembly (or the at least one laminate board) as explained in the following.

In the methods according to the prior art, the cooling of the board layer assembly after the main pressing step is always conducted after the pressing pressure has been fully released from the board layer assembly. Thus, in these prior art methods, the pressing pressure is released when the board layer assembly is still at the high temperature of the main pressing step.

According to the present invention, it has now been found out that cooling the at least one board layer assembly before substantially releasing the pressing pressure, i.e. while the at least on the board layer assembly is still kept pressed substantially with the main pressing pressure, the properties of the at least one finishing layer of the produced laminate board can be significantly improved (compared to the approach in which the cooling is conducted after the pressing pressure has been fully released from the board layer assembly). In detail, it has been found out that such procedure prevents water, which is produced during the lamination process, from vaporizing when releasing the pressing pressure from the at least one board layer assembly. Such water vaporizing would result in a roughening of the surface of the finishing layer and a formation of pores on the finishing layer, which results in poorer properties of the finishing layer, such as a lower smoothness and a higher vulnerability to external influences. This is exactly the case in the known prior art methods.

Since, according to the method of the present invention, the at least one board layer assembly is cooled to a pressure release temperature of 90 °C or lower before substantially releasing the pressing pressure, i.e. while the at least on the board layer assembly is still kept pressed substantially with the main pressing pressure, the mentioned water vaporizing can be avoided or largely avoided and thus the properties of the at least one finishing layer of the produced laminate board are significantly improved. In detail, the at least one finishing layer of the laminate board produced with the method according to the present invention has, for example, a low surface roughness, a low glossiness, and a high resistance to scratching. Furthermore, the at least one finishing layer of the produced laminate board can also have, for example, a high resistance to staining (or acid resistance), a high resistance to water vapour (or steam resistance), and high surface quality value, determined with a graphite test for furniture surface (according to DIN 4575:2020-11). A low surface roughness results in a smooth surface and a low glossiness corresponds to a high mattness of the finishing layer of the produced laminate board. Therefore, the finishing layer of the produced laminate board has also an anti-finger-print effect, which means that fingerprints are (nearly) invisible on the surface. Furthermore, a high surface quality value, determined with a graphite test for furniture surface, indicates that the at least one finishing layer of the produced laminate board has a nearly closed surface with only less pores. This nearly closed surface together also contributes to the high resistances of the he at least one finishing layer of the produced laminate board. Furthermore, the nearly closed surface in combination with the high smoothness results in an easy-to-clean surface of the at least one finishing layer of the produced laminate board.

Thus, due to the specific cooling step, in which the at least one pressed board layer assembly is cooled from the main pressing step temperature to a pressure release temperature of 90 °C or lower while keeping the at least one pressed board layer assembly pressed substantially with the main pressing pressure, the at least one finishing layer of the produced laminate board can, for example, have an extremely homogenous, very smooth surface with a very small amount of pores.

A preferred embodiment of the method according to the present invention is characterized in that
- the main pressing pressure is in the range from 1200 kPa to 2500 kPa, preferably from 1500 kPa to 2000 kPa, more preferably from 1600 kPa to 1900 kPa, in particular from 1670 kPa to 1890 kPa, and/or
- the main pressing step temperature is in the range from 100 °C to 200 °C, preferably from 120 °C to 150 °C, more preferably from 130 °C to 140 °C, and/or
- the pressure release temperature (or cooling step temperature) is in the range from 0 °C to 90 °C, preferably from 5 °C to 70 °C, more preferably from 10 °C to 50 °C, even more preferably from 15 °C to 40 °C, in particular from 25 °C to 30 °C, e.g. ambient temperature.

By reducing the pressure release temperature, water vaporizing when releasing pressing pressure from the at least one board layer assembly can be avoided to an even greater extent or can be avoided even completely, so that the properties of the at least one finishing layer of the produced laminate board can be further improved.

A further preferred embodiment of the method according to the present invention is characterized in that, between step b) and step c), the at least one board layer assembly is subjected to at least one pre-pressing step in which the at least one board layer assembly is pressed with a pre-pressing pressure at a pre-pressing step temperature, wherein preferably the main pressing pressure is higher than the pre-pressing pressure and/or the main pressing step temperature is higher than the pre-pressing step temperature.

A further preferred embodiment of the method according to the present invention is characterized in that
- the pre-pressing pressure is in the range from 800 kPa to 1200 kPa, preferably from 1000 kPa to 1100 kPa, more preferably from 1040 kPa to 1050 kPa, and/or
- the pre-pressing step temperature is in the range from 50 °C to 130 °C, preferably from 70 °C to 110 °C, more preferably from 85 °C to 95 °C, and/or
- the at least one pre-pressing step has a duration in the range from 30 s to 10 min, preferably from 2 min to 4 min.

A further preferred embodiment of the method according to the present invention is characterized in that the at least one board is selected from the group consisting of particle boards; fibreboards, preferably medium-density fibreboards, high-density fibreboards; and combinations thereof.

A further preferred embodiment of the method according to the present invention is characterized in that the at least one décor layer is at least one décor paper which preferably comprises at least one melamine resin and/or at least one urea resin.

A further preferred embodiment of the method according to the present invention is characterized in that the at least one finishing layer (or the at least one precursor for the at least one finishing layer) comprises or consists of
- at least one (polymer) foil or film, preferably comprising or consisting of at least one material selected from the group consisting of acrylic resins; polyvinylchloride; polyesters (e.g. polyethylene terephthalate); polyolefins (e.g. polyethylene, polypropylene); and also mixtures and combinations thereof, and/or
- at least one lacquer (layer), preferably comprising or consisting at least one lacquer selected from the group consisting of acrylic lacquers, epoxy resin lacquers, polyurethane lacquers, alkyd resin lacquers, nitrocellulose lacquers, natural resin lacquers, water-based lacquers, and also mixtures and combinations thereof, and/or
- at least one varnish (layer), preferably comprising or consisting of at least one varnish selected from the group consisting of acrylic varnishes, epoxy resin varnishes, polyurethane varnishes, alkyd resin varnishes, nitrocellulose varnishes, natural resin varnishes, water-based varnishes, and also mixtures and combinations thereof.

A further preferred embodiment of the method according to the present invention is characterized in that the at least one intermediate layer additionally comprises at least one balancing layer (or balance layer), wherein the at least one balancing layer is preferably at least one balancing paper (or balance paper), more preferably at least one balancing paper comprising at least one melamine resin and/or at least one urea resin.

To achieve an extra smooth surface, it is optional to use at least one balancing layer. The paper helps to even out the surface of the baseboards, so the décor layer adheres more evenly to the surface. Preferably, melamine and/or urea resin can be used to produce the balance paper in a similar impregnation process like used for décor papers. For example, the balance papers have a surface weight around 65 g/m².

A further preferred embodiment of the method according to the present invention is characterized in that the sequence of steps c) and d) is repeated one or more times, wherein optionally the (pressing) pressure is released from the at least one cooled board layer assembly before starting a new sequence of steps c) and d).

A further preferred embodiment of the method according to the present invention is characterized in that the at least one main-pressing step has a duration from 3 min to 15 min, preferably from 6 min to 8 min.

A further preferred embodiment of the method according to the present invention is characterized in that the cooling step has a duration from 3 min to 20 min, preferably from 5 min to 15 min, more preferably from 8 to 12 min.

According to a further preferred embodiment of the method according to the present invention, after step b) the rest of the method can be conducted by using a multi-stage press with back cooling as explained in the following. In the press, the upper press plates are fixed, while the lower press plates can be moved in and out of the press. The bottom press plate enters the press with the prepared package (board + at least one intermediate layer + at least one finishing layer) before the press cycle and exits the press after that cycle with the finished laminated matt, smooth and anti-fingerprint surface. The multi storey press can apply the cycle to 16 packages / boards simultaneously. The press plates as well as the packages enter the press with ambient temperature and then the press cycle, preferably consisting of the 5 steps listed in table 1, begins. After that, the finished laminated boards exit the press. In the case, a finishing layer with a carrier foil is used, the carrier foil is peeled off after the exiting of the finished laminate boards. Depending on what kind of decor and paper types are used the duration of cycle step 2, 3 and 4 varies.

**Table 1: Preferred press cycle**

| **Cycle step** | **Activity** | **Pressure [ kPa ]** | **Temperature [ °C ]** |
|---|---|---|---|
| 1 | Press closing | ~ | 25 - 30 |
| 2 | Pre-pressing | 1046 | 90 |
| 3 | Main pressing | 1673.6 - 1882.8 | 130 - 140 |
| 4 | Re-cooling | 1673.6 - 1882.8 | 25 - 30 |
| 5 | Press opening | ~ | 25 - 30 |

The present invention is also directed to a laminate board defined in claim 11.

A preferred embodiment of the laminate board according to the present invention is characterized in that
- a surface roughness, determined according to DIN EN ISO 25178-1 - 2016-12, of not more than 12 µm, preferably not more than 10 µm, more preferably not more than 8 µm, and/or
- a resistance to scratching, determined according to DIN EN 14323 - 2022-02, of at least 1.5, preferably at least 3, more preferably at least 5, most preferably at least 6, and/or
- a glossiness at an angle of 20°, determined according to DIN EN 14323 - 2022-02, of not more than 4.0 GU, preferably not more than 3.0 GU, more preferably not more than 2.5 GU, most preferably not more than 2.0 GU, and/or
- a glossiness at an angle of 60°, determined according to DIN EN 14323 - 2022-02, of not more than 4.0 GU, preferably not more than 3.0 GU, more preferably not more than 2.0 GU, most preferably not more than 1.0 GU, and/or
- a glossiness at an angle of 85°, determined according to DIN EN 14323 - 2022-02, of not more than 9.0 GU, preferably not more than 8.0 GU, more preferably not more than 6.5 GU, most preferably not more than 5.0 GU, and/or
- an resistance to staining (or acid resistance), determined according to DIN EN 14323 - 2022-02, of at least 4, more preferably of 5, and/or
- a resistance to water vapour (or steam resistance), determined according to DIN EN 14323 - 2022-02, of at least 4, more preferably of 5, and/or
- a surface quality grade, determined with a graphite test for furniture surface according to DIN 4575:2020-11 of at least 3, more preferably of at least 4, most preferably of 5.

A further preferred embodiment of the laminate board according to the present invention is characterized in that the at least one intermediate layer further comprises at least one balancing layer, wherein the at least one balancing layer is preferably at least one balancing paper, more preferably at least one balancing paper comprising at least one melamine resin and/or at least one urea resin.

A further preferred embodiment of the laminate board according to the present invention is characterized in that the laminate board is producible or produced by the method according to the present invention.

A further preferred embodiment of the laminate board according to the present invention is characterized in that the board is selected from the group consisting of particle boards; fibreboards, preferably medium-density fibreboards, high-density fibreboards; and combinations thereof.

A further preferred embodiment of the laminate board according to the present invention is characterized in that the at least one décor layer is at least one décor paper which preferably comprises at least one melamine resin and/or at least one urea resin.

A further preferred embodiment of the laminate board according to the present invention is characterized in that the at least one finishing layer comprises or consists of
- at least one (polymer) foil or film, preferably comprising or consisting of at least one material selected from the group consisting of acrylic resins; polyvinylchloride; polyesters (e.g. polyethylene terephthalate); polyolefins (e.g. polyethylene, polypropylene); and also mixtures and combinations thereof, and/or
- at least one lacquer (layer), preferably comprising or consisting at least one lacquer selected from the group consisting of acrylic lacquers, epoxy resin lacquers, polyurethane lacquers, alkyd resin lacquers, nitrocellulose lacquers, natural resin lacquers, water-based lacquers, and also mixtures and combinations thereof, and/or
- at least one varnish (layer), preferably comprising or consisting of at least one varnish selected from the group consisting of acrylic varnishes, epoxy resin varnishes, polyurethane varnishes, alkyd resin varnishes, nitrocellulose varnishes, natural resin varnishes, water-based varnishes, and also mixtures and combinations thereof.

The present invention will be explained in more detail with reference to the following example without restricting the invention to the specifically shown parameters.

### Example 1 (black - matt)

An MDF board (18 mm) according to DIN EN 622-5 - 2010-03 is provided. The board is 100% FSC, IOS-MAT-0003 v15 and CARB Phase 2 certified as well as IOS-MAT-181 v3 compliant.

A board layer assembly is produced by applying a décor paper (FS Y200: 70 gr, 61 % resin content, 100 % melamine resin) on one side of the MDF board, applying a balancing paper (0801: 60 gr, 62,5 % resin content, 65 % urea + 35 % melamine) on the décor paper, and applying a finishing layer (CO 0015 F - L 0 from Company UPCO GmbH) on the balancing paper. The finishing layer is an acrylic layer (or acrylic foil) carried by a PET foil as carrier, wherein the finishing layer is applied on the balancing paper together with the carrier and the carrier is peeled off after application.

The board layer assembly is subjected to a press cycle comprising the cycle steps 1 to 5 as shown in table 2. According to cycle step 2, the board layer assembly is subjected to a pre-pressing step in which the board layer assembly is pressed with a pre-pressing pressure of 1046 kPa at a pre-pressing step temperature 90 °C. According to cycle step 3, the board layer assembly is subjected to at least one main pressing step in which the board layer assembly is pressed with a main pressing pressure of 1673.6 kPa at a main pressing step temperature of at least 140 °C. According to cycle step 4, the still pressed board layer assembly is subjected to a cooling step in which the at least one pressed board layer assembly is cooled from the main pressing step temperature (140 °C) to a pressure release temperature of 35 °C while keeping the at least one pressed board layer assembly pressed with the main pressing pressure 1673.6 kPa).

**Table 2: Press cycle of Example 1**

| **Cycle step** | **Activity** | **Pressure [ kPa ]** | **Temperature [ °C ]** | **Time [min]** |
|---|---|---|---|---|
| 1 | Press closing | | 35 | 0.5 |
| 2 | Pre-pressing | 1046 | 90 | 3 |
| 3 | Main pressing | 1673.6 | 140 | 6.5 |
| 4 | (Re-)cooling | 1673.6 | 35 | 10 |
| 5 | Press opening | | 35 | 0.5 |

### Example 2 (Anthracite - matt)

An MDF board (18 mm) according to DIN EN 622-5 - 2010-03 is provided. The board is 100% FSC, IOS-MAT-0003 v15 and CARB Phase 2 certified as well as IOS-MAT-181 v3 compliant.

A board layer assembly is produced by applying a décor paper (FS Y271: 70 gr, 61 % resin content, 100 % melamine resin) on one side of the MDF board, applying a balancing paper (0801: 60 gr, 62,5 % resin content, 65 % urea + 35 % melamine) on the décor paper, and applying a finishing layer (CO 0015 F - L 0 from Company UPCO GmbH) on the balancing paper. The finishing layer is an acrylic layer (or acrylic foil) carried by a PET foil as carrier, wherein the finishing layer is applied on the balancing paper together with the carrier and the carrier is peeled off after application.

The board layer assembly is subjected to a press cycle comprising the cycle steps 1 to 5 as shown in table 3. According to cycle step 2, the board layer assembly is subjected to a pre-pressing step in which the board layer assembly is pressed with a pre-pressing pressure of 1046 kPa at a pre-pressing step temperature 90 °C. According to cycle step 3, the board layer assembly is subjected to at least one main pressing step in which the board layer assembly is pressed with a main pressing pressure of 1673.6 kPa at a main pressing step temperature of at least 140 °C. According to cycle step 4, the still pressed board layer assembly is subjected to a cooling step in which the at least one pressed board layer assembly is cooled from the main pressing step temperature (140 °C) to a pressure release temperature of 35 °C while keeping the at least one pressed board layer assembly pressed with the main pressing pressure (1673.6 kPa).

**Table 3: Press cycle of Example 2**

| **Cycle step** | **Activity** | **Pressure [ kPa ]** | **Temperature [ °C ]** | **Time [min]** |
|---|---|---|---|---|
| 1 | Press closing | | 35 | 0.5 |
| 2 | Pre-pressing | 1046 | 90 | 3 |
| 3 | Main pressing | 1673.6 | 140 | 6.5 |
| 4 | (Re-)cooling | 1673.6 | 35 | 10 |
| 5 | Press opening | | 35 | 0.5 |

### Example 3 (Snow White - matt)

An MDF board (18 mm) according to DIN EN 622-5 - 2010-03 is provided. The board is 100% FSC, IOS-MAT-0003 v15 and CARB Phase 2 certified as well as IOS-MAT-181 v3 compliant.

A board layer assembly is produced by applying a décor paper (FS Y105: 100 gr, 57 % resin content, 100 % melamine resin) on one side of the MDF board, applying a balancing paper (Y116: 75 gr, 59,5 % resin content, 65 % urea + 35 % melamine) on the décor paper, and applying a finishing layer (CO 0015 F - L 0 from Company UPCO GmbH) on the balancing paper. The finishing layer is an acrylic layer (or acrylic foil) carried by a PET foil as carrier, wherein the finishing layer is applied on the balancing paper together with the carrier and the carrier is peeled off after application.

The board layer assembly is subjected to a press cycle comprising the cycle steps 1 to 5 as shown in table 4. According to cycle step 2, the board layer assembly is subjected to a pre-pressing step in which the board layer assembly is pressed with a pre-pressing pressure of 1046 kPa at a pre-pressing step temperature 90 °C. According to cycle step 3, the board layer assembly is subjected to at least one main pressing step in which the board layer assembly is pressed with a main pressing pressure of 1673.6 kPa at a main pressing step temperature of at least 135 °C. According to cycle step 4, the still pressed board layer assembly is subjected to a cooling step in which the at least one pressed board layer assembly is cooled from the main pressing step temperature (135 °C) to a pressure release temperature of 35 °C while keeping the at least one pressed board layer assembly pressed with the main pressing pressure (1673.6 kPa).

**Table 4: Press cycle of Example 3**

| **Cycle step** | **Activity** | **Pressure [ kPa ]** | **Temperature [ °C ]** | **Time [min]** |
|---|---|---|---|---|
| 1 | Press closing | | 35 | 0.5 |
| 2 | Pre-pressing | 1046 | 90 | 3 |
| 3 | Main pressing | 1673.6 | 135 | 7 |
| 4 | (Re-)cooling | 1673.6 | 35 | 10 |
| 5 | Press opening | | 35 | 0.5 |

### Example 4 (Ice White - matt)

An MDF board (18 mm) according to DIN EN 622-5 - 2010-03 is provided. The board is 100% FSC, IOS-MAT-0003 v15 and CARB Phase 2 certified as well as IOS-MAT-181 v3 compliant.

A board layer assembly is produced by applying a décor paper (FS Y107: 100 gr, 57 % resin content, 100 % melamine resin) on one side of the MDF board, applying a balancing paper (Y116: 75 gr, 59,5 % resin content, 65 % urea + 35 % melamine) on the décor paper, and applying a finishing layer (CO 0015 F - L 0 from Company UPCO GmbH) on the balancing paper. The finishing layer is an acrylic layer (or acrylic foil) carried by a PET foil as carrier, wherein the finishing layer is applied on the balancing paper together with the carrier and the carrier is peeled off after application.

The board layer assembly is subjected to a press cycle comprising the cycle steps 1 to 5 as shown in table 5. According to cycle step 2, the board layer assembly is subjected to a pre-pressing step in which the board layer assembly is pressed with a pre-pressing pressure of 1046 kPa at a pre-pressing step temperature 90 °C. According to cycle step 3, the board layer assembly is subjected to at least one main pressing step in which the board layer assembly is pressed with a main pressing pressure of 1673.6 kPa at a main pressing step temperature of at least 135 °C. According to cycle step 4, the still pressed board layer assembly is subjected to a cooling step in which the at least one pressed board layer assembly is cooled from the main pressing step temperature (135 °C) to a pressure release temperature of 35 °C while keeping the at least one pressed board layer assembly pressed with the main pressing pressure (1673.6 kPa).

**Table 5: Press cycle of Example 4**

| **Cycle step** | **Activity** | **Pressure [ kPa ]** | **Temperature [ °C ]** | **Time [min]** |
|---|---|---|---|---|
| 1 | Press closing | | 35 | 0.5 |
| 2 | Pre-pressing | 1046 | 90 | 3 |
| 3 | Main pressing | 1673.6 | 135 | 7 |
| 4 | (Re-)cooling | 1673.6 | 35 | 10 |
| 5 | Press opening | | 35 | 0.5 |

### Example 5 (Ivory - matt)

An MDF board (18 mm) according to DIN EN 622-5 - 2010-03 is provided. The board is 100% FSC, IOS-MAT-0003 v15 and CARB Phase 2 certified as well as IOS-MAT-181 v3 compliant.

A board layer assembly is produced by applying a décor paper (FS Y348: 87 gr, 58 % resin content, 100 % melamine resin) on one side of the MDF board, applying a balancing paper (Y116: 75 gr, 59,5 % resin content, 65 % urea + 35 % melamine) on the décor paper, and applying a finishing layer (CO 0015 F - L 0 from Company UPCO GmbH) on the balancing paper. The finishing layer is an acrylic layer (or acrylic foil) carried by a PET foil as carrier, wherein the finishing layer is applied on the balancing paper together with the carrier and the carrier is peeled off after application.

The board layer assembly is subjected to a press cycle comprising the cycle steps 1 to 5 as shown in table 6. According to cycle step 2, the board layer assembly is subjected to a pre-pressing step in which the board layer assembly is pressed with a pre-pressing pressure of 1046 kPa at a pre-pressing step temperature 90 °C. According to cycle step 3, the board layer assembly is subjected to at least one main pressing step in which the board layer assembly is pressed with a main pressing pressure of 1673.6 kPa at a main pressing step temperature of at least 135 °C. According to cycle step 4, the still pressed board layer assembly is subjected to a cooling step in which the at least one pressed board layer assembly is cooled from the main pressing step temperature (135 °C) to a pressure release temperature of 35 °C while keeping the at least one pressed board layer assembly pressed with the main pressing pressure (1673.6 kPa).

**Table 6: Press cycle of Example 5**

| **Cycle step** | **Activity** | **Pressure [ kPa ]** | **Temperature [ °C ]** | **Time [min]** |
|---|---|---|---|---|
| 1 | Press closing | | 35 | 0.5 |
| 2 | Pre-pressing | 1046 | 90 | 3 |
| 3 | Main pressing | 1673.6 | 135 | 7 |
| 4 | (Re-)cooling | 1673.6 | 35 | 10 |
| 5 | Press opening | | 35 | 0.5 |

### Example 6 (Slate Grey - matt)

An MDF board (18 mm) according to DIN EN 622-5 - 2010-03 is provided. The board is 100% FSC, IOS-MAT-0003 v15 and CARB Phase 2 certified as well as IOS-MAT-181 v3 compliant.

A board layer assembly is produced by applying a décor paper (FS Y318: 70 gr, 61 % resin content, 100 % melamine resin) on one side of the MDF board, applying a balancing paper (0801: 60 gr, 62,5 % resin content, 65 % urea + 35 % melamine) on the décor paper, and applying a finishing layer (CO 0015 F - L 0 from Company UPCO GmbH) on the balancing paper. The finishing layer is an acrylic layer (or acrylic foil) carried by a PET foil as carrier, wherein the finishing layer is applied on the balancing paper together with the carrier and the carrier is peeled off after application.

The board layer assembly is subjected to a press cycle comprising the cycle steps 1 to 5 as shown in table 7. According to cycle step 2, the board layer assembly is subjected to a pre-pressing step in which the board layer assembly is pressed with a pre-pressing pressure of 1046 kPa at a pre-pressing step temperature 90 °C. According to cycle step 3, the board layer assembly is subjected to at least one main pressing step in which the board layer assembly is pressed with a main pressing pressure of 1673.6 kPa at a main pressing step temperature of at least 140 °C. According to cycle step 4, the still pressed board layer assembly is subjected to a cooling step in which the at least one pressed board layer assembly is cooled from the main pressing step temperature (140 °C) to a pressure release temperature of 35 °C while keeping the at least one pressed board layer assembly pressed with the main pressing pressure (1673.6 kPa).

**Table 7: Press cycle of Example 6**

| **Cycle step** | **Activity** | **Pressure [ kPa ]** | **Temperature [ °C ]** | **Time [min]** |
|---|---|---|---|---|
| 1 | Press closing | | 35 | 0.5 |
| 2 | Pre-pressing | 1046 | 90 | 3 |
| 3 | Main pressing | 1673.6 | 140 | 6.5 |
| 4 | (Re-)cooling | 1673.6 | 35 | 10 |
| 5 | Press opening | | 35 | 0.5 |

### Benchmark of product properties

Several properties of the finishing layers of the produced laminate boards according to Examples 1 to 6 have been determined. The results are shown in table 8 in comparison to the properties of the finishing layers of ten comparative products from the state of the art.

**Table 8: Properties of the finishing layers of the produced laminate boards according to Examples 1 to 6 of comparative products 1 to 10 from the state of the art**

| | Surface Roughness | Glossiness [GU] at angle | | | Resistance to | | | Graphite test |
|---|---|---|---|---|---|---|---|---|
| | | 20° | 60° | 85° | scratching | staining | water vapour | |
| Comp. Product 1 | 15 µm | 2.8 | 3.1 | 10.7 | 0.1 | 5 | 4 | 1 |
| Comp. Product 2 | 14 µm | 2.8 | 4.0 | 26.4 | 0.5 | 5 | 5 | 1 |
| Comp. Product 3 | 25 µm | 3.9 | 3.1 | 9.2 | 0.1 | 4 | 5 | 1 |
| Comp. Product 4 | 25 µm | 4.0 | 4.1 | 8.6 | 0.1 | 4 | 5 | 1 |
| Comp. Product 5 | 30 µm | 3.6 | 3.2 | 8.7 | 0.1 | 4 | 5 | 1 |
| Comp. Product 6 | 25 µm | 3.7 | 3.3 | 10.8 | 1.0 | 3 | 5 | 1 |
| Comp. Product 7 | 30 µm | 3.0 | 2.4 | 7.7 | 1.0 | 5 | 5 | 1 |
| Comp. Product 8 | 15 µm | 2.9 | 3.3 | 28.0 | 0.1 | 5 | 3 | 1 |
| Comp. Product 9 | 14 µm | 3.6 | 4.8 | 22.4 | 0.1 | 3 | 5 | 1 |
| Comp. Product 10 | 15 µm | 3.4 | 4.3 | 22.6 | 0.1 | 3 | 5 | 1 |
| Product of Example 1 | 10 µm | 3.0 | 1.8 | 9.0 | 2.0 | 5 | 5 | 5 |
| Product of Example 2 | 10 µm | 2.7 | 1.8 | 8.0 | 2.5 | 5 | 5 | 5 |
| Product of Example 3 | 10 µm | 3.3 | 2.4 | 8.3 | 4.5 | 5 | 5 | 5 |
| Product of Example 4 | 10 µm | 3.5 | 2.9 | 7.3 | 5.0 | 5 | 5 | 5 |
| Product of Example 5 | 10 µm | 2.9 | 2.6 | 8.4 | 5.0 | 5 | 5 | 4 |
| Product of Example 6 | 10 µm | 2.5 | 1.9 | 7.9 | 3.0 | 5 | 4 | 5 |

Comparative product 1 is the laminate board "feelness" from the producer Kronospan, wherein the finishing layer of this laminate board is a PET finishing layer. Comparative product 2 is the laminate board "Avant-garde" from the producer Kronospan, wherein the finishing layer of this laminate board is an acrylic lacquer layer. Comparative product 3 is the laminate board "Optimatt" from the producer Kaindl, wherein the finishing layer of this laminate board is the same finishing layer as used in Examples 1 to 6, i.e. CO 0015 F - L 0 from Company UPCO GmbH. Comparative product 4 is the laminate board "Xtreme matt" from the producer Pfleiderer, wherein the finishing layer of this laminate board is an HPL finishing layer. Comparative product 5 is the laminate board "Aptico" from the producer Funder, wherein the finishing layer of this laminate board is an HPL finishing layer. Comparative product 6 is the laminate board "Perfect Sense Premium Matt" from the producer Egger, wherein the finishing layer of this laminate board is a lacquer layer. Comparative product 7 is the laminate board "Rauvisio noir" from the producer Rehau, wherein the finishing layer of this laminate board is an HPL finishing layer. Comparative product 8 is the laminate board "soft touch super matt - S064" from the producer Gizir, wherein the finishing layer of this laminate board is a PVC finishing layer. Comparative product 9 is the laminate board "soft touch super matt - S020" from the producer Gizir, wherein the finishing layer of this laminate board is a PVC finishing layer. Comparative product 10 is the laminate board "soft touch super matt - S010" from the producer Gizir, wherein the finishing layer of this laminate board is a PVC finishing layer.

In the production methods of all comparative products 1 to 10, the cooling of the board layer assembly (after the main pressing step) is conducted after the pressing pressure has been fully released from the board layer assembly, i.e. the pressing pressure is released when the board layer assembly is still at the high temperature of the main pressing step.

All values for the surface roughness given in table 8 have been determined according to DIN EN ISO 25178-1 - 2016-12. All values for the glossiness at angle 20° given in table 8, all values for the glossiness at angle 60° given in table 8, and all values for the glossiness at angle 85° given in table 8 have been determined according to DIN EN 14323 - 2022-02. All values for the resistance to scratching given in table 8, all values for the resistance to staining given in table 8, and all values for the resistance to water vapour given in table 8 have been determined according to DIN EN 14323 - 2022-02. The values given in the column "Graphite test" in table 8 are surface quality grades which have all been determined with a graphite test for furniture surface according to DIN 4575:2020-11.

As clearly arises from the values given in table 8, the finishing layers of the laminate boards according to Examples 1 to 6 have improved properties compared to the comparative products 1 to 10 from the state of the art:
- None of the comparative products can reach the smoothness of the finishing layer of the products according to Examples 1 to 6 (surface roughness of 10 µm). The second best comparative products in terms of roughness reach only a surface roughness of 14 µm, which is significantly rougher than the finishing layers of the products of Examples 1 to 6.
- The scratch resistance test and the graphite test of the products of Examples 1 to 6 show much better results than all the other products.
- The finishing layers of the products of Examples 1 to 6 all provide a matt and anti-fingerprint finishing layer with an extraordinarily smooth, scratch resistant, and easy to clean surface that has even a high resistance against staining and water vapour. None of the comparative products can provide such combination of outstanding properties.

## Claims

1. Method of producing one or more laminate boards, the method comprising the following steps:
a) Providing at least one board comprising wooden material,
b) Producing at least one board layer assembly by
- applying at least one intermediate layer comprising at least one décor layer on at least one side of the at least one board and applying at least one finishing layer or at least one precursor for at least one finishing layer on the at least one intermediate layer, or
- applying at least one coated or impregnated intermediate layer comprising at least one décor layer on at least one side of the at least one board, the at least one coated or impregnated intermediate layer having a coating or impregnation of at least one finishing layer or at least one precursor for at least one finishing layer,
c) Subjecting the at least one board layer assembly to at least one main pressing step in which the at least one board layer assembly is pressed with a main pressing pressure at a main pressing step temperature of at least 100 °C,
d) Subjecting the at least one pressed board layer assembly to a cooling step in which the at least one pressed board layer assembly is cooled from the main pressing step temperature to a pressure release temperature of 90 °C or lower while keeping the at least one pressed board layer assembly pressed substantially with the main pressing pressure,
wherein the at least one finishing layer is an acrylic layer.

2. Method according to claim 1, **characterized in that**
- the main pressing pressure is in the range from 1200 kPa to 2500 kPa, and
- the main pressing step temperature is in the range from 100 °C to 200 °C, and
- the pressure release temperature is in the range from 0 °C to 90 °C.

3. Method according to claim 1 or 2, **characterized in that**, between step b) and step c), the at least one board layer assembly is subjected to at least one pre-pressing step in which the at least one board layer assembly is pressed with a pre-pressing pressure at a pre-pressing step temperature, wherein preferably the main pressing pressure is higher than the pre-pressing pressure and/or the main pressing step temperature is higher than the pre-pressing step temperature.

4. Method according to claim 3, **characterized in that**
- the pre-pressing pressure is in the range from 800 kPa to 1200 kPa, and
- the pre-pressing step temperature is in the range from 50 °C to 130 °C, and
- the at least one pre-pressing step has a duration in the range from 30 s to 10 min.

5. Method according to any one of claims 1 to 4, **characterized in that** the at least one board is selected from the group consisting of particle boards; fibreboards, preferably medium-density fibreboards, high-density fibreboards; and combinations thereof.

6. Method according to any one of claims 1 to 5, **characterized in that** the at least one décor layer is at least one décor paper.

7. Method according to any one of claims 1 to 6, **characterized in that** the at least one finishing layer comprises or consists of
- at least one foil, or
- at least one lacquer layer, or
- at least one varnish layer.

8. Method according to any one of claims 1 to 7, **characterized in that** the at least one intermediate layer additionally comprises at least one balancing layer.

9. Method according to any one of claims 1 to 8, **characterized in that** the sequence of steps c) and d) is repeated one or more times, wherein optionally the pressure is released from the at least one cooled board layer assembly before starting a new sequence of steps c) and d).

10. Method according to any one of claims 1 to 9, **characterized in that** the at least one main-pressing step has a duration from 3 min to 15 min.

11. Laminate board comprising
a board comprising wooden material,
at least one intermediate layer comprising at least one décor layer, the at least one intermediate layer being arranged on at least one side of the board, and
at least one finishing layer being arranged on the at least one intermediate layer,
wherein the at least one finishing layer has a surface roughness, determined according to DIN EN ISO 25178-1 - 2016-12, of not more than 15 µm, has a resistance to scratching, determined according to DIN EN 14323 - 2022-02, of at least 0.5, and has a glossiness at an angle of 85°, determined according to DIN EN 14323 - 2022-02, of not more than 10.0 GU,
wherein the at least one finishing layer is an acrylic layer, and
wherein the laminate board is producible or produced by the method according to any one of claims 1 to 10.

12. Laminate board according to claim 11, **characterized in that** the laminate board has
- a glossiness at an angle of 20°, determined according to DIN EN 14323 - 2022-02, of not more than 4.0 GU, and
- a glossiness at an angle of 60°, determined according to DIN EN 14323 - 2022-02, of not more than 4.0 GU, and
- an resistance to staining, determined according to DIN EN 14323 - 2022-02, of at least 4, and
- a resistance to water vapour, determined according to DIN EN 14323 - 2022-02, of at least 4, and
- a surface quality grade, determined with a graphite test for furniture surface according to DIN 4575:2020-11 of at least 3.

13. Laminate board according to claim 11 or 12, **characterized in that** the at least one intermediate layer further comprises at least one balancing layer.

## Patentansprüche

1. Verfahren zur Herstellung einer oder mehrerer Laminatplatten, wobei das Verfahren die folgenden Schritte umfasst:
a) Bereitstellen mindestens einer Platte, die Holzmaterial umfasst,
b) Herstellen mindestens einer Platte-Schicht-Anordnung durch
- Aufbringen mindestens einer Zwischenschicht, die mindestens eine Dekorschicht umfasst, auf mindestens einer Seite der mindestens einen Platte und Aufbringen mindestens einer Deckschicht oder mindestens eines Vorläufers für mindestens eine Deckschicht auf die mindestens eine Zwischenschicht, oder
- Aufbringen mindestens einer beschichteten oder imprägnierten Zwischenschicht, die mindestens eine Dekorschicht umfasst, auf mindestens eine Seite der mindestens einen Platte, wobei die mindestens eine beschichtete oder imprägnierte Zwischenschicht eine Beschichtung oder Imprägnierung aus mindestens einer Deckschicht oder mindestens einem Vorläufer für mindestens eine Deckschicht aufweist,
c) Unterziehen der mindestens einen Platte-Schicht-Anordnung mindestens einem Hauptpressschritt, in dem die mindestens eine Platte-Schicht-Anordnung mit einem Hauptpressdruck bei einer Hauptpressschritttemperatur von mindestens 100 °C gepresst wird,
d) Unterziehen der mindestens einen gepressten Platte-Schicht-Anordnung einem Kühlschritt, in dem die mindestens eine gepresste Platte-Schicht-Anordnung von der Hauptpressschritttemperatur auf eine Druckablassungstemperatur von 90 °C oder weniger abgekühlt wird, während die mindestens eine gepresste Platte-Schicht-Anordnung im Wesentlichen mit dem Hauptpressdruck gepresst gehalten wird,
wobei die mindestens eine Deckschicht eine Acrylschicht ist.

2. Verfahren nach Anspruch 1, **dadurch gekennzeichnet, dass**
der Hauptpressdruck im Bereich von 1200 kPa bis 2500 kPa liegt, und
die Hauptpressschritttemperatur im Bereich von 100 °C bis 200 °C liegt, und
die Druckablassungstemperatur im Bereich von 0 °C bis 90 °C liegt.

3. Verfahren nach Anspruch 1 oder 2, **dadurch gekennzeichnet, dass** zwischen Schritt b) und Schritt c) die mindestens eine Platte-Schicht-Anordnung mindestens einem Vorpressschritt unterzogen wird, in dem die mindestens eine Platte-Schicht-Anordnung mit einem Vorpressdruck bei einer Vorpressschritttemperatur gepresst wird, wobei vorzugsweise der Hauptpressdruck höher ist als der Vorpressdruck und/oder die Hauptpressschritttemperatur höher ist als die Vorpressschritttemperatur.

4. Verfahren nach Anspruch 3, **dadurch gekennzeichnet, dass**
- der Hauptpressdruck im Bereich von 800 kPa bis 1200 kPa liegt, und
- die Vorpressschritttemperatur im Bereich von 50 °C bis 130 °C liegt, und
- der mindestens eine Vorpressschritt eine Dauer im Bereich von 30 s bis 10 min hat.

5. Verfahren nach einem der Ansprüche 1 bis 4, **dadurch gekennzeichnet, dass** die mindestens eine Platte ausgewählt ist aus der Gruppe bestehend aus Spanplatten; Faserplatten, vorzugsweise mitteldichten Faserplatten, hochdichten Faserplatten; und Kombinationen davon.

6. Verfahren nach einem der Ansprüche 1 bis 5, **dadurch gekennzeichnet, dass** die mindestens eine Dekorschicht mindestens ein Dekorpapier ist.

7. Verfahren nach einem der Ansprüche 1 bis 6, **dadurch gekennzeichnet, dass** die mindestens eine Deckschicht
- mindestens eine Folie, oder
- mindestens eine Lackschicht, oder
- mindestens eine Firnisschicht umfasst oder enthält.

8. Verfahren nach einem der Ansprüche 1 bis 7, **dadurch gekennzeichnet, dass** die mindestens eine Zwischenschicht zusätzlich mindestens eine Ausgleichsschicht umfasst.

9. Verfahren nach einem der Ansprüche 1 bis 8, **dadurch gekennzeichnet, dass** die Abfolge der Schritte c) und d) ein- oder mehrmals wiederholt wird, wobei optional der Druck aus der mindestens einen gekühlten Platte-Schicht-Anordnung vor Beginn einer neuen Abfolge der Schritte c) und d) abgelassen wird.

10. Verfahren nach einem der Ansprüche 1 bis 9, **dadurch gekennzeichnet, dass** der mindestens eine Hauptpressschritt eine Dauer von 3 min bis 15 min hat.

11. Laminatplatte, umfassend
eine Platte umfassend Holzmaterial,
mindestens eine Zwischenschicht, die mindestens eine Dekorschicht umfasst, wobei die mindestens eine Zwischenschicht auf mindestens einer Seite der Platte angeordnet ist, und
mindestens eine Deckschicht, die auf der mindestens einen Zwischenschicht angeordnet ist,
wobei die mindestens eine Deckschicht eine Oberflächenrauheit, bestimmt gemäß DIN EN ISO 25178-1 - 2016-12, von nicht mehr als 15 µm aufweist, eine Kratzfestigkeit, bestimmt gemäß DIN EN 14323 - 2022-02, von mindestens 0,5 aufweist und einen Glanzgrad bei einem Winkel von 85°, bestimmt gemäß DIN EN 14323 - 2022-02, von nicht mehr als 10,0 GU aufweist,
wobei die mindestens eine Deckschicht eine Acrylschicht ist, und
wobei die Laminatplatte mit dem Verfahren gemäß einem der Ansprüche 1 bis 10 herstellbar ist oder hergestellt ist.

12. Laminatplatte nach Anspruch 11, **dadurch gekennzeichnet, dass** die Laminatplatte
einen Glanzgrad bei einem Winkel von 20°, bestimmt gemäß DIN EN 14323 - 2022-02, von nicht mehr als 4,0 GU, und
einen Glanzgrad bei einem Winkel von 60°, bestimmt gemäß DIN EN 14323 - 2022-02, von nicht mehr als 4,0 GU, und
eine Fleckenbeständigkeit, bestimmt gemäß DIN EN 14323 - 2022-02, von mindestens 4 und
eine Wasserdampfbeständigkeit, bestimmt gemäß DIN EN 14323 - 2022-02, von mindestens 4 und
eine Oberflächengüteklasse, bestimmt mit einem Graphittest für Möbeloberflächen gemäß DIN 4575:2020-11, von mindestens 3 aufweist.

13. Laminatplatte nach Anspruch 11 oder 12, **dadurch gekennzeichnet, dass** die mindestens eine Zwischenschicht ferner mindestens eine Ausgleichsschicht umfasst.

## Revendications

1. Procédé de production d'un ou plusieurs panneaux stratifiés, le procédé comprenant les étapes suivantes consistant à :
a) fournir au moins un panneau comprenant du matériau à base de bois,
b) produire au moins un ensemble de couches de panneau en
- appliquant au moins une couche intermédiaire comprenant au moins une couche décorative sur au moins un côté du au moins un panneau et appliquant au moins une couche de finition ou au moins un précurseur pour au moins une couche de finition sur la au moins une couche intermédiaire, ou
- appliquant au moins une couche intermédiaire revêtue ou imprégnée comprenant au moins une couche décorative sur au moins un côté du au moins un panneau, la au moins une couche intermédiaire revêtue ou imprégnée présentant un revêtement ou une imprégnation d'au moins une couche de finition ou d'au moins un précurseur pour au moins une couche de finition,
c) soumettre le au moins un ensemble de couches de panneau à au moins une étape de pressage principal dans laquelle le au moins un ensemble de couches de panneau est pressé avec une pression de pressage principal à une température d'étape de pressage principal d'au moins 100°C,
d) soumettre le au moins un ensemble de couches de panneau pressé à une étape de refroidissement dans laquelle le au moins un ensemble de couches de panneau pressé est refroidi de la température d'étape de pressage principal à une température de libération de pression de 90°C ou moins tout en maintenant le au moins un ensemble de couches de panneau pressé étant pressé sensiblement avec la pression de pressage principal,
dans lequel la au moins une couche de finition est une couche acrylique.

2. Procédé selon la revendication 1, **caractérisé en ce que**
la pression de pressage principal est dans la plage de 1 200 kPa à 2 500 kPa, et
la température de l'étape de pressage principal est dans la plage de 100°C à 200°C, et
la température de libération de pression est dans la plage de 0°C à 90°C.

3. Procédé selon la revendication 1 ou 2, **caractérisé en ce que**, entre l'étape b) et l'étape c), le au moins un ensemble couche de panneau est soumis à au moins une étape de pré-pression dans laquelle le au moins un ensemble couche de panneau est pressé avec une pression de pré-pression à une température d'étape de pré-pression, dans lequel de préférence la pression de pression principale est supérieure à la pression de pré-pression et/ou la température d'étape de pression principale est supérieure à la température d'étape de pré-pression.

4. Procédé selon la revendication 3, **caractérisé en ce que**
- la pression de pré-pressage est dans la plage de 800 kPa à 1 200 kPa, et
- la température de l'étape de pré-pressage est dans la plage de 50°C à 130°C, et
- la au moins une étape de pré-pressage présente une durée comprise entre 30 s et 10 min.

5. Procédé selon l'une quelconque des revendications 1 à 4, **caractérisé en ce que** le au moins un panneau est choisi dans le groupe comprenant des panneaux de particules ; des panneaux de fibres, de préférence des panneaux de fibres de densité moyenne, des panneaux de fibres de densité élevée ; et des combinaisons de ceux-ci.

6. Procédé selon l'une quelconque des revendications 1 à 5, **caractérisé en ce que** la au moins une couche décorative est au moins un papier décoratif.

7. Procédé selon l'une quelconque des revendications 1 à 6, **caractérisé en ce que** la au moins une couche de finition comprend ou est constituée de
- au moins une feuille, ou
- au moins une couche de laque, ou
- au moins une couche de vernis.

8. Procédé selon l'une quelconque des revendications 1 à 7, **caractérisé en ce que** la au moins une couche intermédiaire comprend en outre au moins une couche d'équilibrage.

9. Procédé selon l'une quelconque des revendications 1 à 8, **caractérisé en ce que** la séquence d'étapes c) et d) est répétée une ou plusieurs fois, dans lequel, facultativement, la pression est libérée du au moins un ensemble de couches de panneau refroidi avant de commencer une nouvelle séquence d'étapes c) et d).

10. Procédé selon l'une quelconque des revendications 1 à 9, **caractérisé en ce que** la au moins une étape de pressage principal présente une durée de 3 min à 15 min.

11. Panneau stratifié, comprenant
un panneau comprenant un matériau à base de bois,
au moins une couche intermédiaire comprenant au moins une couche décorative, la au moins une couche intermédiaire étant agencée sur au moins un côté du panneau, et
au moins une couche de finition étant agencée sur la au moins une couche intermédiaire,
dans lequel la au moins une couche de finition présente une rugosité de surface, déterminée selon DIN EN ISO 25178-1 - 2016-12, ne dépassant pas 15 µm, présente une résistance à la rayure, déterminée selon DIN EN 14323 - 2022-02, d'au moins 0,5, et présente une brillance à un angle de 85°, déterminée selon DIN EN 14323 - 2022-02, ne dépassant pas 10,0 GU,
dans lequel la au moins une couche de finition est une couche acrylique, et
dans lequel le panneau stratifié peut être produit ou est produit par le procédé selon l'une quelconque des revendications 1 à 10.

12. Panneau stratifié selon la revendication 11, **caractérisé en ce que** le panneau stratifié présente
une brillance à un angle de 20°, déterminée selon DIN EN 14323 - 2022-02, d'au plus 4,0 GU, et
une brillance à un angle de 60°, déterminée selon DIN EN 14323 - 2022-02, d'au plus 4,0 GU, et
une résistance à la coloration, déterminée selon DIN EN 14323 - 2022-02, d'au moins 4, et
une résistance à la vapeur d'eau, déterminée selon DIN EN 14323 - 2022-02, d'au moins 4, et
une note de qualité de surface, déterminée avec un test de graphite pour la surface des meubles selon DIN 4575:2020-11, d'au moins 3.

13. Panneau stratifié selon la revendication 11 ou 12, **caractérisé en ce que** la au moins une couche intermédiaire comprend en outre au moins une couche d'équilibrage.
